(19) Europäisches Patentamt
European Patent Office
Office européen des brevets

(11) Numéro de publication : **0 097 076**
**B1**

(12) # FASCICULE DE BREVET EUROPÉEN

(45) Date de publication du fascicule du brevet : **20.08.86**

(21) Numéro de dépôt : **83401084.5**

(22) Date de dépôt : **30.05.83**

(51) Int. Cl.⁴ : **C 07 F 5/06**, C 07 F 5/02, H 01 M 6/18

(54) **Tétra-alkynyl borates ou aluminates de métaux alcalins, leurs solutions solides avec des matières plastiques et leur application à la constitution d'éléments conducteurs pour des générateurs électrochimiques.**

(30) Priorité : **01.06.82 FR 8209538**

(43) Date de publication de la demande : **28.12.83 Bulletin 83/52**

(45) Mention de la délivrance du brevet : **20.08.86 Bulletin 86/34**

(84) Etats contractants désignés : **AT BE CH DE GB IT LI LU NL SE**

(56) Documents cités :
**EP-A- 0 037 776**
**DE-A- 1 644 994**
**US-A- 4 060 674**

(73) Titulaire : **ANVAR Agence Nationale de Valorisation de la Recherche**
**43, rue Caumartin**
**F-75436 Paris Cédex 09 (FR)**

**SOCIETE NATIONALE ELF AQUITAINE**
**Tour Aquitaine**
**F-92400 Courbevoie (FR)**

(72) Inventeur : **Armand, Michel**
**10, rue Gabriel Fauré**
**F-74000 Annecy (FR)**
Inventeur : **El Kadiri Cherkaoui El Moursly, Fouzia**
**Villa Cherkaoui**
**Rue Smara Bettana Sale (MA)**

(74) Mandataire : **Gutmann, Ernest et al**
**S.C. Ernest Gutmann - Yves Plasseraud 67, boulevard Haussmann**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 097 076 B1

**Description**

L'invention est relative à de nouvelles solutions solides essentiellement constituées par des composés ioniques dissous au sein d'un matériau macromoléculaire.

L'invention concerne plus particulièrement des solutions solides essentiellement constituées par des composés ioniques de formule $M^+X^-$, dans laquelle M est un cation dérivé d'un métal alcalin ou ion ammonium, et $X^-$ est un anion ayant un comportement semblable à celui d'un acide fort, lesquels composés ioniques sont dissous au sein d'un matériau macromoléculaire formé au moins en partie d'un ou plusieurs homo- et/ou copolymères dérivés d'un ou plusieurs motifs monomères comportant au moins un hétéro-atome, notamment d'oxygène ou d'azote, apte à former des liaisons du type donneur-accepteur avec le cation du composé ionique.

Plus particulièrement, l'invention concerne des solutions solides essentiellement constituées des susdits composés ioniques dissous dans au moins certains des matériaux plastiques, tels que ceux qui ont été décrits dans EP-A-0 013 199 intitulé « Générateurs électrochimiques de production de courant et nouveaux matériaux pour leur fabrication ».

Les solutions solides selon l'invention sont douées d'une conductivité cationique suffisante, pour être utilisables pour la production de matériaux d'électrolytes solides pour la constitution de générateurs électrochimiques, de préférence rechargeables. Ces solutions solides sont encore applicables à la constitution d'électrodes de générateurs électrochimiques, lorsque ces électrodes sont constituées par le produit d'agglomération en une masse composite de la matière active de celle-ci, le cas échéant, d'un composé inerte à conduction électronique, d'une part, et de la solution solide susdite, d'autre part.

Il va de soi que les solutions solides selon l'invention peuvent mettre en œuvre tous autres types de matière plastique, dans la mesure où leurs caractéristiques de solubilité réciproques sont suffisantes à l'obtention d'une solution solide présentant une conductivité cationique de $10^{-5}\ \Omega^{-1} \cdot cm^{-1}$, de préférence à une température n'excédant pas 130 °C.

L'invention concerne également de nouveaux matériaux à conduction ionique, notamment cationique, plus particulièrement un nouvel électrolyte solide polymère constitué au moins en partie par une solution solide d'un ou plusieurs susdits composés ioniques, entièrement dissous au sein d'un matériau macromoléculaire formé au moins en partie par un polymère, dont les motifs monomères (d'une ou plusieurs sortes) comportent au moins un hétéroatome, notamment d'oxygène ou d'azote, apte à former des liaisons du type donneur-accepteur avec le cation du composé ionique.

Les composés ioniques entrant dans la constitution des solutions solides selon l'invention peuvent être représentés par la formule globale suivante :

$$(R-C\equiv C)_4X^- M^+$$

dans laquelle :

X est un élément trivalent susceptible d'entrer en coordinance 4, tel que le bore ou l'aluminium ;

les groupes R sont des radicaux hydrocarbonés aprotiques, c'est-à-dire des radicaux non donneurs de protons ;

M est un métal alcalin tel que le lithium, le sodium et le potassium ;

ou $(R-C\equiv C)_4X^- M^+$ représente le dipropynyl-dibutynyl borate de lithium, de sodium ou de potassium.

Les groupes hydrocarbonés R sont choisis parmi ceux qui permettent au composé ionique ainsi formé de former des solutions solides mutuelles avec des matériaux plastiques, plus particulièrement avec des composés du type polyéther, tels qu'ils ont été définis dans la susdite demande de brevet européen, ou encore avec des matériaux plastiques formés de macromolécules hydrocarbonées portant des chaînes latérales du type polyéther.

Avantageusement, les groupes R contiennent chacun un nombre d'atomes de carbone n'excédant pas 15. De préférence encore, ils sont constitués par des groupes alkyle ou aralkyle. Ils sont identiques ou différents les uns des autres, à l'intérieur d'un même composé ionique.

Conformément à une variante avantageuse de l'invention, certains des atomes de carbone de ces groupes hydrocarbonés sont remplacés par des hétéroatomes tels que des atomes d'oxygène, de soufre ou d'azote.

Dans des composés ioniques entrant dans la constitution de solutions solides préférées de l'invention, les groupes R sont constitués par des groupes alkyle contenant de 1 à 8 atomes de carbone, par exemple de 4 à 6, de préférence moins de 4, atomes de carbone ou par des groupes arylalkyle comprenant de 8 à 15 atomes de carbone dans lesquels le groupe aryle est soit un groupe phénylène séparé du plus proche des atomes de carbone participant à la triple liaison du groupe alcynyle correspondant par au moins un groupe diméthylène, de préférence triméthylène, soit un groupe phényle terminal.

On peut encore représenter la formule du composé ionique entrant dans la constitution des solutions solides de l'invention de la façon qui suit :

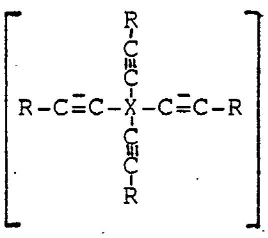 $M^+$ 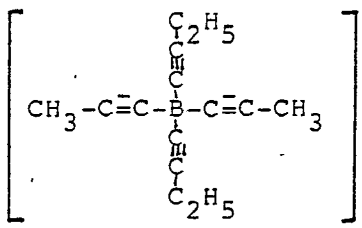 $Li^+$ ou $Na^+$ ou $K^+$

Ces deux composés ioniques entrant dans la constitution des solutions solides selon l'invention et dans lesquels X est constitué par du bore, sont ci-après dénommés « tétraalkynyl borates de métaux alcalins », et ceux dans lesquels X est de l'aluminium : « tétraalkynyl alanates de métaux alcalins ».

Pour préparer les composés ioniques entrant dans la constitution des solutions solides selon l'invention, et dans lesquels M est du lithium ou du sodium, on fait réagir à la fois un dérivé organolithien et un dérivé de chlorure d'organo-magnésien dans lesquels le groupe organique est constitué par un groupe $R-C\equiv C$ avec un dérivé halogéné, notamment fluoré, de l'élément trivalent X. La réaction est effectuée au sein d'un solvant aprotique, tel que le tétrahydrofuranne et l'acétonitrile, le mélange étant ensuite mis à réagir, avec un excès d'un sel de potassium, tel que KSCN au sein d'une solution aqueuse (le sel de potassium pouvant être remplacé par un sel d'un autre élément alcalin lourd, tel qu'un sel de césium), le produit insoluble finalement obtenu étant ensuite soumis à une réaction d'échange ionique avec, selon le cas, un sel de lithium ou de sodium.

Pour la fabrication des composés ioniques dans lesquels M est du potassium ou un métal alcalin plus lourd, il ne sera pas nécessaire de procéder à la réaction d'échange ionique terminale sus-indiquée.

En variante, on peut remplacer dans la réaction initiale les dérivés organolithiens ou chlorures d'organomagnésium par des dérivés organopotassiques, ce qui permet alors l'obtention directe du composé ionique selon l'invention dans lequel M est le potassium. Mais les dérivés organo-potassiques ne sont en général pas disponibles dans le commerce.

On décrit ci-après, à titre d'exemple, l'application de ce procédé à l'obtention de tétra-alkynyl borate de lithium, étant entendu que le spécialiste sera à même d'adapter les conditions des réactions, pour obtenir les autres composés selon l'invention.

Première étape : Préparation de l'alkynyl lithium ou de l'alkynyl chlorure magnésium selon les équations de réactions suivantes :

$$R-C\equiv CH + CH_3Li \longrightarrow R-C\equiv CLi + CH_4 \quad (1)$$
$$R-C\equiv CH + CH_3MgCl \longrightarrow R-C\equiv CMgCl + CH_4 \quad (2)$$

Conditions des deux réactions :

température ambiante,
temps : 1 heure,
solvant : THF.

Dans le cas de la réaction (1), on utilise un indicateur coloré : le triphényl méthane. Ce composé a une acidité inférieure (pKa = 30) à celle de l'alcyne (pKa = 26). La formation de l'anion $(C_6H_5)_3-C^-$ intensément coloré en rouge apparaît après salification complète du carbone acétylénique :

$$(C_6H_5)_3-CH + CH_3\,Li \longrightarrow (C_6H_5)_3-C^- + CH_4$$

Quelques gouttes d'alcyne rajoutées à ce mélange font disparaître cette couleur.

Dans le cas du magnésien des quantités stoechiométriques de chaque réactif sont utilisées (utilisation de solutions commerciales titrées : $CH_3MgCl$ 3M).

Deuxième étape

On met en œuvre l'une des réactions (1') ou (2') qui suivent.

$$\begin{matrix} 4R-C\equiv C-Li \\ 4R-C\equiv C-MgCl \end{matrix} + BF_3 \longrightarrow 3LiF + \begin{matrix} Li^+(R-C\equiv C)_4B^- \\ MgCl^+(R-C\equiv C)_4B^- \end{matrix} \quad (1')$$

$$\begin{matrix} 4R-C\equiv C-Li \\ 4R-C\equiv C-MgCl \end{matrix} + LiBF_4 \longrightarrow 4LiF \begin{matrix} Li^+(R-C\equiv C)_4B^- \\ MgCl^+(R-C\equiv C)_4B^- \end{matrix} \quad (2')$$

Conditions de deux réactions :

température ambiante
temps : 24 h
solvants : éther pour la réaction (1′)
THF pour la réaction (2′).

On a constaté que LiF a le même indice de réfraction que les solvants THF et éther. LiF n'est donc pas visible dans les deux liquides organiques. Le mélange réactionnel est versé dans un grand excès d'une solution d'un sel de potassium (KSCN), ce qui conduit à la réaction :

$Li^+(R—C≡C)_4B^-$
$+ K^+ \longrightarrow K^+(R—C≡C)_4B^-$
$MgCl^+(R—C≡C)_4B^-$
solvant : eau

Le précipité recueilli retient du fluorure de lithium peu soluble dans l'eau (2,7 g/l). Le sel est éliminé en reprenant le solide à l'acétone qui ne dissout que $K^+(R—C≡C)_4B^-$.

Le composé obtenu après évaporation est une poudre blanche microcristalline.

La conversion du sel de potassium en sel de lithium se fait selon la réaction d'échange ionique, au sein d'un solvant inerte, tel que l'acétonitrile (ACN)

$$K^+(R—C≡C)_4B^- + LiCl \longrightarrow Li^+(R—C≡C)_4B^- + KCl$$

Le chlorure de lithium est soluble dans THF ou ACN, alors que KCl est rigoureusement insoluble, ce qui permet de déplacer complètement l'équilibre.

LiCl qui est très hygroscopique, doit être déshydraté et pesé en atmosphère anhydre.

Cette méthode permet d'obtenir une solution titrée (0.2 M ou 1 M) du sel de lithium, solution qui peut être utilisée directement pour la préparation des complexes avec le poly(oxyde d'éthylène) ou le poly(oxyde de propylène), respectivement désignés par les abréviations POE et PPO.

Pour obtenir les dérivés correspondants d'aluminium, c'est-à-dire les tétraalkynylalanates de métaux alcalins, on pourra utiliser en lieu et place de $BF_3$, des composés du type $LiAlH_4$ ou $AlCl_3$.

Les composés ioniques ci-dessus définis présentent des qualités tout à fait satisfaisantes de dissolution mutuelle avec le poly(oxyde de propylène) et même, pour les composés dans lesquels les groupes R sont constitués par des chaînes hydrocarbonées de faible longueur, avec le poly(oxyde d'éthylène).

En ce qui concerne le matériau macromoléculaire entrant dans la constitution des solutions solides selon l'invention, le rapport du nombre d'hétéroatomes provenant du ou des motifs monomères dudit polymère au nombre d'atomes du métal alcalin dudit composé ionique est compris entre 4 et 30, notamment 4 et 16. Il va de soi que la proportion du composé ionique dissous doit être compatible avec son niveau de solubilité dans le polymère choisi.

Le métal alcalin est de préférence le lithium ou le sodium.

Des matériaux plastiques préférés dans lesquels les susdits composés ioniques sont mis en solution, sont des homo- et/ou copolymères dérivés de motifs monomères représentés :

soit par la formule suivante :

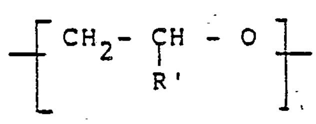

dans laquelle R′ représente un atome d'hydrogène ou l'un des groupes Ra, $—CH_2—O—Ra$, $—CH_2—O—Re—Ra$, $—CH_2—N{=}(CH_3)_2$, avec Ra représentant un radical alkyle ou cycloalkyle comportant notamment 1 à 16, de préférence 1 à 4 atomes de carbone, Re représentant un radical polyéther de formule générale

$$—(CH_2—CH_2—O)_p—,$$

p ayant une valeur de 1 à 100, notamment de 1 à 2,

soit par la formule suivante :

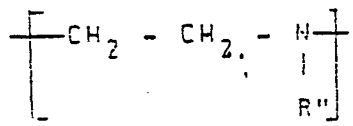

dans laquelle R″ représente Ra, —Re—Ra, avec Ra et Re ayant respectivement l'une des significations susindiquées,

soit par la formule suivante :

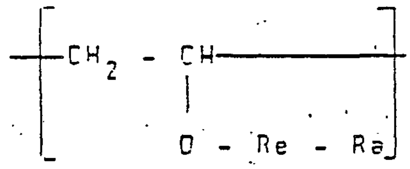

dans laquelle Ra et Re ont respectivement l'une des significations susindiquées,

soit par la formule :

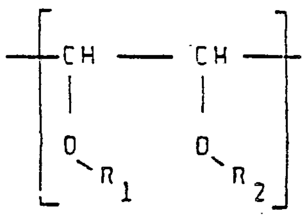

dans laquelle $R_1$ et $R_2$ sont identiques ou différents et représentent chacun l'un des groupes Re, Re—Ra avec les significations ci-dessus, Re pouvant alors représenter aussi un poly-éther de formule

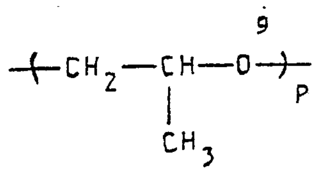

La préparation de l'électrolyte solide polymère peut s'effectuer par mise en solution, dans un solvant tel que l'acétonitrile, ou encore le méthanol, du polymère et du composé ionique, puis élimination du solvant, étant entendu que l'on utilise une proportion de composé ionique inférieure à celle pour laquelle le seuil de solubilité est atteint.

On peut aussi utiliser toute méthode ne mettant pas en œuvre de solvant, par exemple par dissolution dans le polymère fondu.

Les électrolytes solides réalisés selon l'invention, trouvent une application particulièrement intéressante pour la réalisation de générateurs électrochimiques aussi bien primaires que secondaires.

En particulier, un électrolyte solide comportant en solution un composé ionique du genre susindiqué, peut être associé à une électrode négative constituée d'un matériau apte à fournir l'ion alcalin correspondant au métal du composé ionique choisi et une électrode positive apte à incorporer les atomes de ce métal. On peut, par exemple, prévoir une électrode négative constituée par ce même métal alcalin sous la forme d'un alliage ; ou constituée par un composé intermétallique, un composé d'insertion ou analogue. Pour l'électrode positive, on peut utiliser tout matériau dont la structure cristalline permet l'insertion de métaux alcalins. On cite par exemple les chalcogénures qui permettent la diffusion du métal alcalin dans leur structure. On peut encore, pour ce qui est d'autres exemples de matériaux appropriés à la formation de l'électrode positive, se référer à la demande de brevet européen déjà citée.

On peut aussi prévoir de réaliser une des électrodes, par exemple la positive, en formant un composite à partir de la matière active de celle-ci et de la solution solide du composé ionique, au sein du même matériau macromoléculaire. Ce composite peut comporter aussi un composé inerte à conduction électronique. On pourra avoir recours, pour constituer de telles électrodes — et mis à part le choix du composé cationique — aux mêmes modes de constitutions que ceux décrits dans EP-A-0 013 199.

Lorsqu'on réalise ces générateurs, on s'aperçoit que le nouvel électrolyte selon l'invention présente l'avantage que l'anion du sel ou composé ionique en solution est inerte vis-à-vis de la plupart des matériaux d'électrode que l'on peut utiliser. Cette propriété autorise un grand nombre de cycles et un stockage stable. En outre, cette inertie chimique confère aux générateurs ainsi réalisés une très bonne résistance aux chocs thermiques.

D'autres caractéristiques et avantages des électrolytes solides polymères selon l'invention apparaîtront dans les exemples de réalisation qui suivent étant bien entendu que ces exemples ne sont nullement limitatifs.

Ces exemples sont indicatifs, notamment des propriétés chimiques et/ou physiques des composés

ioniques particuliers de l'invention et, en relation avec certains électrolytes plastiques constitués avec certains d'entre eux, des valeurs des températures en °C pour lesquelles les conductivités sont égales à environ $10^{-5}$ $\Omega^{-1}$ $cm^{-1}$ ($T\sigma10^{-5}$), voire même à $10^{-4}$ $\Omega^{-1}$ $cm^{-1}$ ($T\sigma10^{-4}$). Ces mesures ont été effectuées sous vide, de façon à éliminer toute trace d'humidité et/ou de solvant.

Dans tous ces exemples, le matériau macromoléculaire est, selon le cas, un poly-(oxyde d'éthylène) (POE) ou un poly-(oxyde de propylène) de masses moléculaires égales ou supérieures à 900 000. L'électrolyte a été obtenu par dissolution de 1 g de ce poly(oxyde d'éthylène) ou de ce poly(oxyde de propylène) dans 35 ml d'acétonitrile, puis addition du composé ionique, pour obtenir les rapports atomiques O/Li ou O/Na qui sont indiqués ci-après.

La solution ainsi obtenue est coulée sur un support de polytétrafluoréthylène, sur une épaisseur de 5 mm, puis étuvée à 60 °C pendant 3 heures.

Les mesures de conductivité ont été faites selon les techniques décrites par E. Schouler et al, J. Chim. Phys. 9,1 309/16 (1973) et D. Ravaine et al, J. Chim. Phys. 5, 93-70 (1974).

Par mise en œuvre du procédé sus-décrit on a fabriqué, à partir des matières premières correspondantes, les composés suivants

(1) le tétraheptynyl borate de lithium

$$Li^+(C_5H_{11}—C{\equiv}C)_4B^-$$

dont le spectre IR est reproduit dans la figure 1 ci-jointe ; laquelle fournit la courbe représentative des variations de transmittance en fonction soit de la longueur (en microns) d'onde, soit du nombre d'ondes en $cm^{-1}$.

(2) le tétrahexynyl borate de lithium

$$Li^+(C_4H_9—C{\equiv}C)_4B^-$$

dont le spectre IR est reproduit dans la figure 2 ci-jointe, dans les mêmes conditions qu'à propos du composé précédent.

(3) le tétra(phényl-pentynyl) borate de potassium

$$K^+(C_6H_5—(CH_2)_3—C{\equiv}C)_4B^-$$

(4) le tétra(phényl-pentynyl) borate de lithium

$$Li^+(C_6H_5—(CH_2)_3—C{\equiv}C)_4B^-$$

Dans le tableau qui suit on a fourni les données électrochimiques auxquelles conduisent les 4 composés qui précèdent, après dissolution dans le POE et le PPO, dans les proportions atomiques relatives qui résultent également du tableau.

| Composé ionique | Matériau macromoléculaire | O/M * | $T\sigma10^{-5}$ | $T\sigma10^{-4}$ |
|---|---|---|---|---|
| (1) | PPO | 8 | 90 | >130 |
| (1) | PPO | 12 | 77 | >130 |
| (2) | POE | 8 | 91 | >130 |
| (2) | POE | 12 | 72,1 | 103,5 |
| (3) | POE | 12 | 54,3 | 104 |
| (4) | POE | 10 | 67,5 | 160 |

* M = lithium, sauf pour le composé (3), cas dans lequel M est le potassium.

Ces résultats attestent de la conductivité ionique des matériaux ainsi obtenus, conductivité qui est suffisante à permettre leur utilisation dans des générateurs électrochimiques du genre décrit.

L'allongement des groupes alkyle (R) se manifeste par une réduction de la solubilité des composés obtenus dans POE. Leur solubilité dans PPO est moins affectée. Il est particulièrement avantageux de constituer les solutions solides selon l'invention avec des produits tels que les suivants :

$$Li^+(CH_3—C\equiv C)_4B^-$$

$$Li^+(C_2H_3—C\equiv C)_4B^-$$

$$Li^+(C_3H_7—C\equiv C)_4B^-$$

$$Li^+(C_2H_5—C\equiv C)_2(CH_3—C\equiv C)_2B^-$$

ou les sels correspondants de sodium ou de potassium.

L'introduction d'un groupe phényle (ou phénylène) dans les chaînes R, à distance suffisante des liaisons alcynyle, est compatible avec POE et se manifeste en outre par un effet plastifiant à l'égard des solutions solides formées.

De la même façon on peut préparer les tétraalkynyl-aluminates correspondants.

**Revendications**

1. Solution solide constituée par un ou plusieurs composés ioniques de formule : $(R—C\equiv C)_4X^-$, $M^+$ dans laquelle :

X est un élément trivalent susceptible d'entrer en coordinance 4, tel que le bore ou l'aluminium,

les groupes R sont des radicaux hydrocarbonés aprotiques, c'est-à-dire des radicaux non donneurs de protons,

M est un métal alcalin tel que le lithium, le sodium et le potassium,

ou $(R—C\equiv C)_4X^-M^+$ représente le dipropynyl-dibutynyl borate de lithium, de sodium ou de potassium,

entièrement dissous au sein d'un matériau macromoléculaire formé au moins en partie par un polymère dont les motifs monomères comportent au moins un hétéroatome, notamment d'oxygène ou d'azote, apte à former des liaisons du type donneur-accepteur avec le cation du composé ionique.

2. Solution solide selon la revendication 1, caractérisée en ce que dans le composé ionique, les groupes R contiennent chacun un nombre d'atomes de carbone n'excédant pas 15, ces groupes étant de préférence constitués par des groupes alkyle ou aralkyle.

3. Solution solide selon la revendication 2, caractérisée en ce que les groupes R sont constitués par des groupes alkyle contenant de 1 à 8 atomes de carbone, notamment de 4 à 6 atomes de carbone.

4. Solution solide selon la revendication 2, caractérisée en ce que les groupes R sont constitués par des groupes alkyle contenant moins de 4 atomes de carbone.

5. Solution solide selon la revendication 2, caractérisée en ce que les groupes R sont constitués par des groupes arylalkyle comprenant de 8 à 15 atomes de carbone dans lesquels le groupe aryle est soit un groupe phénylène séparé du plus proche des atomes de carbone participant à la triple liaison du groupe alcynyle correspondant par au moins un groupe diméthylène, de préférence triméthylène, soit un groupe phényle terminal.

6. Solution solide selon l'une quelconque des revendications 1 à 5, caractérisée en ce que le métal alcalin est constitué par du lithium, du sodium ou du potassium.

7. Solution solide selon l'une quelconque des revendications 1 à 6, caractérisée en ce que le matériau macromoléculaire est constitué par du poly(oxyde d'éthylène) ou du poly(oxyde de propylène).

8. Solution solide selon l'une quelconque des revendications 1 à 7, caractérisée en ce que le rapport du nombre d'hétéroatomes provenant des motifs monomères du susdit matériau macromoléculaire au nombre d'atomes du métal alcalin dudit composé ionique est compris entre 4 et 30, notamment entre 4 et 16.

9. Matériau à conduction ionique, notamment cationique, caractérisé en ce qu'il est constitué au moins en partie par une solution solide selon l'une quelconque des revendications 1 à 8.

10. Générateur électrochimique, caractérisé en ce que son électrolyte est constitué par le matériau selon la revendication 9 et en ce que l'électrode négative qui lui est associée est constituée d'un matériau apte à fournir l'ion alcalin correspondant au métal du composé ionique choisi, et que l'électrode positive qui lui est associée est apte à incorporer les atomes de ce métal.

**Claims**

1. Solid solution constituted by one or several ionic compounds of the formula :

$$(R—C\equiv C)_4X^-, M^+$$

in which :

X is a trivalent element liable of entering into 4-coordination, such as boron or aluminium,

the groups R are aprotic hydrocarbon radicals, that is to say radicals which are non proton donors ;

M is an alkali metal such as lithium, sodium and potassium,

or $(R—C{\equiv}C)_4X^-$, $M^+$ represents dipropinyl-dibutinyl borate of lithium, of sodium or of potassium entirely dissolved within a macromolecular material formed at least in part by a polymer, the monomer units of which include at least one hetero-atom, particularly oxygen or nitrogen, adapted to form bonds of the donor-acceptor type with the cation of the ionic compound.

2. Solid solution according to claim 1, characterized in the fact that in the ionic compound, the groups R each contain a number of carbon atoms not exceeding 15, these groups being preferably alkyl or aralkyl groups.

3. Solid solution according to claim 1, characterized in the fact that the groups R are constituted by alkyl groups containing from 1 to 8 carbon atoms, particularly groups containing from 1 to 8 carbon atoms, particularly from 4 to 6 carbon atoms.

4. Solid solution according to claim 2, characterized in the fact that the groups R are constituted by alkyl groups containing less than 4 carbon atoms.

5. Solid solution according to claim 2, characterized in the fact that the groups R are constituted by arylalkyl groups comprising from 8 to 15 carbon atoms in which the aryl group is either a phenylene group separated from the closest of the carbon atom taking part in the triple bond of the corresponding alkynyl group by at least one dimethylene group, preferably trimethylene, or a terminal phenyl group.

6. Solid solution according to anyone of claims 1 to 5, characterized in the fact that the alkali metal is constituted by lithium, sodium or potassium.

7. Solid solution according to anyone of claims 1 to 6, characterized in the fact that the macromolecular material is constituted by poly(ethylene oxide) or poly(propylene oxide).

8. Solid solution according to anyone of claims 1 to 7, characterized in the fact that the ratio of the number of hetero-atoms derived from the monomer units of the above said macromolecular material to the number of atoms of the alkali metal of said ionic compound is comprised between 4 and 30, particularly between 4 and 16.

9. Ionic conduction material, particularly cationic, characterized in the fact that it is constituted at least in part by a solid solution according to anyone of claims 1 to 8.

10. Electrochemical generator, in which its electrolyte is constituted in part by the material according to claim 9, and characterized in the fact that the negative electrode associated with it is constituted by a material adapted to supply the corresponding alkali ion to the metal of the ionic compound selected, and the positive electrode associated with it, is adapted to incorporate the atoms of this metal.

**Patentansprüche**

1. Feste Lösung, bestehend aus einer oder mehreren ionischen Verbindungen der Formel :

$$(R—C{\equiv}C)_4X^-,\ M^+,$$

worin :

X ein dreiwertiges Element ist, das in eine Vierfachkoordination eintreten kann, wie Bor oder Aluminium,

die Gruppen R aprotische Kohlenwasserstoffreste sind, d. h. Reste darstellen, die keine Protonendonatoren sind,

M ein Alkalimetall ist, wie Lithium, Natrium und Kalium,

oder $(R—C{\equiv}C)_4X^-M^+$ das Dipropinyl-Dibutinyl-Borat von Lithium, Natrium oder Kalium bedeutet, welche ionische(n) Verbindung(en) vollständig in einem makromolekularen Material aufgelöst ist bzw. sind, welches Material wenigstens zum Teil aus einem Polymer gebildet ist, dessen monomere Bauteile wenigstens ein Heteroatom, insbesondere Sauerstoff oder Stickstoff, aufweisen, das zur Ausbildung von Bindungen mit dem Kation der ionischen Verbindung vom Donator-Akzeptor-Typus befähigt ist.

2. Feste Lösung nach Anspruch 1, dadurch gekennzeichnet, daß in der ionischen Verbindung die Gruppen R jeweils eine Anzahl von Kohlenstoffatomen enthalten, die nicht über 15 hinausgeht, wobei diese Gruppen vorzugsweise aus Alkylgruppen oder Aralkylgruppen gebildet sind.

3. Feste Lösung nach Anspruch 2, dadurch gekennzeichnet, daß die Gruppen R aus 1 bis 8, insbesondere 4 bis 6 Kohlenstoffatome enthaltenden Alkylgruppen gebildet sind.

4. Feste Lösung nach Anspruch 2, dadurch gekennzeichnet, daß die Gruppen R aus weniger als 4 Kohlenstoffatome enthaltenden Alkylgruppen gebildet sind.

5. Feste Lösung nach Anspruch 2, dadurch gekennzeichnet, daß die Gruppen R aus 8 bis 15 Kohlenstoffatome enthaltenden Arylalkylgruppen gebildet sind, worin die Arylgruppe entweder eine Phenylengruppe ist, die von dem nächstgelegenen, an der Dreifachbindung der entsprechenden Alkinylgruppe teilnehmenden Kohlenstoffatom durch wenigstens eine Dimethylengruppe, vorzugsweise eine Trimethylengruppe, getrennt ist, oder eine endständige Phenylgruppe ist.

6. Feste Lösung nach einem der Ansprüche 1 bis 5, dadurch gekennzeichnet, daß das Alkalimetall durch Lithium, Natrium oder Kalium gebildet ist.

7. Feste Lösung nach einem der Ansprüche 1 bis 6, dadurch gekennzeichnet, daß das makromolekulare Material aus Poly(ethylenoxid) oder Poly(propylenoxid) gebildet ist.

8. Feste Lösung nach einem der Ansprüche 1 bis 7, dadurch gekennzeichnet, daß das Verhältnis der Anzahl der aus den monomeren Bauteilen des obgenannten makromolekularen Materials stammenden Heteroatome zur Anzahl der Alkalimetallatome der genannten ionischen Verbindung zwischen 4 und 30, insbesondere zwischen 4 und 16 beträgt.

9. Material mit Ionenleitung, insbesondere Kationenleitung, dadurch gekennzeichnet, daß es wenigstens zum Teil aus einer festen Lösung nach einem der Ansprüche 1 bis 8 besteht.

10. Elektrochemischer Generator, dadurch gekennzeichnet, daß sein Elektrolyt aus dem Material nach Anspruch 9 besteht, und daß die mit ihm in Verbindung stehende negative Elektrode aus einem Material besteht, das zur Lieferung des Alkaliions befähigt ist, das dem Metall der gewählten ionischen Verbindung entspricht, und daß die positive Elektrode, die mit ihm in Verbindung steht, zur Aufnahme der Atome dieses Metalles befähigt ist.

Fig.1

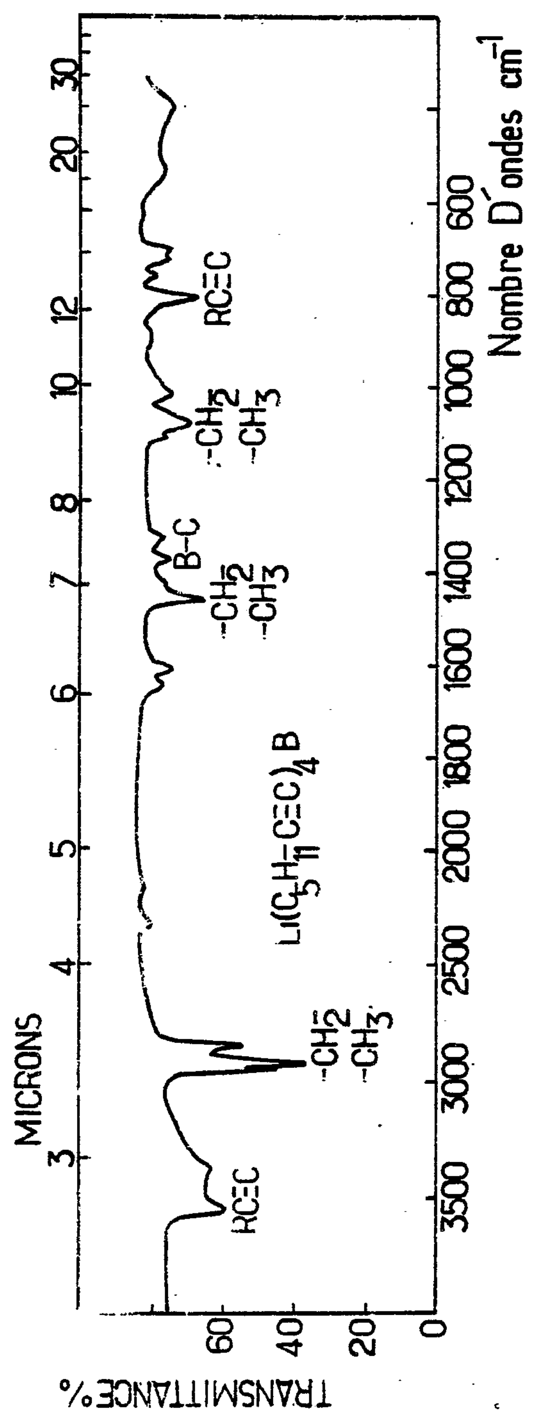
MICRONS
TRANSMITTANCE %
Nombre D'ondes $cm^{-1}$
RC≡C
-CH2
-CH3
B-C
$Li(C_5H_{11}-C\equiv C)_4B$

Fig.2

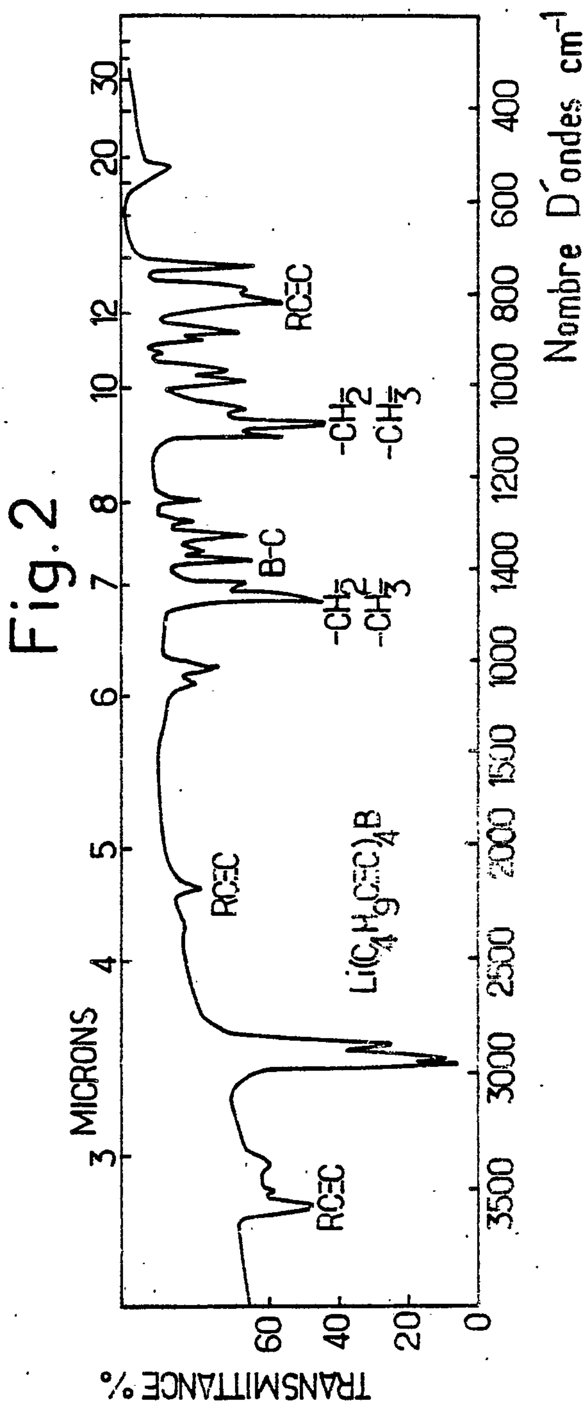
MICRONS
TRANSMITTANCE %
Nombre D'ondes $cm^{-1}$
RC≡C
-CH2
-CH3
B-C
$Li(C_4H_9C\equiv C)_4B$